# EUROPEAN PATENT SPECIFICATION

(11) **EP 4 500 274 B1**
(45) Date of publication and mention of the grant of the patent: **14.01.2026**
(21) Application number: 23713386.3
(22) Date of filing: 24.03.2023
(51) Int. Cl.: G02F 1/1523, G06K 19/00, G09F 3/00, G02F 1/1516

(54) **IRREVERSIBLE ORGANIC ELECTROCHROMIC MATERIALS**
IRREVERSIBLES ORGANISCHES ELEKTROCHROMES MATERIAL
MATÉRIAUX ÉLECTROCHROMIQUES ORGANIQUES IRRÉVERSIBLES

(30) Priority: 24.03.2022 EP 22164076
(43) Date of publication of application: 05.02.2025
(73) Proprietor: Universität Wien, 1010 Wien (AT)
(72) Inventor: BONIFAZI, Davide, 1090 Vienna (AT); MAGGINI, Laura, 1090 Vienna (AT); STOPIN, Antoine, 1090 Vienna (AT); ROMANO, Gianvito, 1090 Vienna (AT)
(74) Representative: Gassner, Birgitta
(86) International application number: PCT/EP2023/057657
(87) International publication number: WO 2023/180536

(56) References cited:
- WO-A1-2010/003138
- US-A1- 2015 310 771
- LIN QIANQI ET AL: "Two-Electron, Two-Proton Oxidation of Catechol: Kinetics and Apparent Catalysis", THE JOURNAL OF PHYSICAL CHEMISTRY C, vol. 119, no. 3, 22 January 2015 (2015-01-22), US, pages 1489 - 1495, XP93044698, ISSN: 1932-7447, DOI: 10.1021/jp511414b
- FELICIA J D MAHARAJ ET AL: "The instructive redox behaviour of 4-ferrocenylcatechol on nanocrystalline titanium dioxide electrodes", APPLIED ORGANOMETALLIC CHEMISTRY, LONGMAN GROUP UK, LTD, HOBOKEN, USA, vol. 21, no. 2, 2 January 2007 (2007-01-02), pages 73 - 75, XP071530885, ISSN: 0268-2605, DOI: 10.1002/AOC.1178
- LIN QIANQI ET AL: "Two-Electron, Two-Proton Oxidation of Catechol: Kinetics and Apparent Catalysis", THE JOURNAL OF PHYSICAL CHEMISTRY C, vol. 119, no. 3, 22 January 2015 (2015-01-22), US, pages 1489 - 1495, XP093044698, ISSN: 1932-7447, DOI: 10.1021/jp511414b

## Description

The project leading to this application has received funding from the European Union funding scheme "MSCA-ITN-EID - European Industrial Doctorates" under Project call "H2020-MSCA-ITN-2018". The project title is "ENTREPRENEURING CHEMICAL IRREVERSIBILITY TO PROTOTYPE RESPONSIVE SMART LABELS", the project acronym is "CHARISMA", and the project number is 814299. Link: https://cordis.europa.eu/project/id/814299

### Field of the Invention

The present invention relates to the development of sustainable and economically-competitive irreversible organic electrochromic matrices able to change their appearance from a colorless (bleached) to a colored state upon an electrically-induced chemical stimulus. Once transitioned to the colored state, the process is irreversible. These materials can find use as irreversible visual indicators in various electrochromic devices, e.g., labels and tags, upon integration with energy storage systems, electronic and/or sensing components.

### Background Art

Electrochromism is the visible change in transmittance and/or reflectance of a material, associated with an electrochemically induced oxidation-reduction reaction. It results from the generation of different absorption bands in the visible region upon switching between redox states. The color change is commonly between a transparent ("bleached") state and a colored state, or between two colored states. This optical change is usually obtained upon application of a small electric current generated by low potentials (< 3 V).

Devices exploiting the phenomenon of electrochromism to change their optical state upon application of voltage, i.e., electrochromic (EC) devices, have found application in a variety of fields, ranging from automotive mirrors, smart windows, eye-wear, color-shifting surfaces (camouflage, design, textiles/fashion, etc.), and small displays.

Non-emissive electrochromic displays (ECDs) especially, have various merits such as high contrast, optical memory, long stability of the colored state without requiring a continuous energy input, no visual dependence on viewing angle, no retro-illumination and sustainable production costs, e.g., materials employed and manufacturing costs; making them extremely desirable for integration in flexible, ultrathin, low-power "passive" applications, for which persistent coloration is required, e.g., interface for consumer electronics, electronic readers, reconfigurable signage, price labels, charge indicators, tags, etc.

These displays can further be integrated with sensing, e.g., temperature, humidity, pH sensor, etc.; and interactive electronic components, e.g., RFID, NFC, etc.; providing a visual interface capable of reacting and responding to users, the environment and other devices, e.g., Internet of Things (IoT).

Established electrochromic materials range from inorganic to organic compounds. The inorganics include transition metal oxides (TMO) from groups IV-VI, and hexacyanometallates (Prussian blue), while the organics range from small EC molecules, e.g., viologens, ferrocenes, metallo phthalocyanines, etc.; to conjugated conductive polymers, e.g., polythiophene, polypyrrole, polyaniline and their derivatives, metallo supramolecular polymers. Generally, organics present a broader color palette and exhibit faster response times than inorganic materials, and are thus better suited for smaller scale display applications.

These materials mostly present reversible electrochromic behavior. However, for certain applications in which the displayed information is "static", e.g., labels, tags, tickets, etc., and cyclability is not required, irreversible electrochromic materials are desirable. In this case the ECD would irreversibly change state showing the required information upon first activation and this would be permanently displayed, without the possibility of modification, e.g., anti-counterfeiting application.

In particular, applications targeted could be tickets, e.g., events, transport, etc.; tags, e.g., product, security and price; labels, e.g., monitoring, etc.; cards, e.g., business, gift, credit and debit cards; to name a few. From now on, these applications will be collectively designated "tags and labels".

Currently the choice for irreversible organic electrochromic materials is very limited. WO2010003138A discloses ECDs comprising a pair of conducting electrodes and a redox material disposed between the pair of electrodes. Upon activation by an electric potential the redox material consisting of a colorless monomer (e.g., thiophene) polymerizes to a colored polymer. For example, when bithiophene is used as monomer, it may irreversibly electropolymerize to a red/orange polymer. Durability of the "irreversible" state is not specified.

Maharaj et al. disclosed the possibility to use catechols as "non-innocent" electron-transfer facilitating anchoring units for electrochromophores such as ferrocene, to control their adsorption onto nanocrystalline TiO₂ electrodes (e.g., the organometallic compound 4-ferrocenylcatechol) and consequently their electrochromic switching, making it "pseudo-irreversible" in unbuffered aprotic solvents (Maharaj F.J.D. et al., Applied Organometallic Chemistry, Longman Group UK, LTD, Hoboken, USA, 2007 vol. 21, no. 2). Specifically, upon initial oxidation with 0.45 V both the ferrocene and catechol moiety of the organometallic compound oxidize to ferrocenium cation and 1,2-benzoquinone, respectively. Subsequent application of a 0 V potential allows for the reduction of the ferrocenium back to ferrocene, but not for benzoquinone to catechol, owing to the irreversibility of the catechol oxidation in unbuffered aprotic solvents (e.g., otherwise reversible in buffered solution). The oxidized form of catechol (i.e., 1,2-benzoquinone) cannot maintain the interaction with the oxide electrode and subsequently desorbs diffusing in solution. Such breaking of the intimate contact between the organometallic species and the TiO₂ electrode impedes any further electrochromic switching of the ferrocenyl chromophore (i.e., diffusion induced irreversibility) in these conditions (i.e., unbuffered aprotic solvents).

To meet the demand for irreversible EC applications, e.g., displays for tags and labels; new materials are required, that are energy-efficient, e.g., triggered at potentials < 3 V, not requiring additional energy inputs to enable persistence of the colored state; and sustainable, e.g., in terms of production, processability and disposal; while still granting efficiency and lasting of the irreversible color change. In addition, these devices and their integration into products, e.g., tags and labels, etc.; should be done so that they can be produced in large scale with low cost and low environmental impact advantages. These products are expected to have tremendous market impact.

For example, the development of irreversible ECDs to integrate as visual indicators in smart labels (i.e., comprising RFID/NFC, sensors, etc. electronic components), might have a tremendous impact for food and pharmaceutical supply chains.

The close monitoring of conditions affecting a product has become an important method to assure product quality and compliance with safety standards. This is especially critical for valuable goods such as food or pharmaceutical products which need to be discarded if the product quality and the compliance with safety standards cannot be assured. But also in other sectors, the assurance of quality is crucial e.g., artworks.

Sensors for monitoring the collective state of stored or transported products have been developed, however there is an urgent need for precise, sustainable and inexpensive materials that can be integrated into devices able to monitor the quality of individual mass-produced products, providing information via a straightforward and appealing interface, and value-added functionality. Direct, timely and clear visual indications with no room for interpretation displaying any incidents possibly occurred to a product are important at different stages of the manufacturing process, from incoming inspection and production to final quality control and logistics, but also for the end-consumer.

Two categories of visualized messages can be used to differentiate information: i) messages requiring a display that can alternate between different states multiple times and ii) those that, upon triggering, will swiftly and permanently change their state. Both systems are of great value depending on the application: the reversible system enables multiple employment, while the irreversible system ensures absence of false negatives also decreasing counterfeit possibilities. However, due to the scarcity of convenient irreversible electrochromic materials, currently most electrochromic monitoring labels employ reversible chromogenic materials.

### Summary of invention

It is the object of this invention to develop a sustainable and economically advantageous irreversible organic electrochromic material to be employed in devices, e.g., ECDs for tags and labels; providing an irreversible and persistent change of color and/or transparency upon application of a low voltage.

Irreversible means that the material within the displays changes its state when activated the first time, and the initial status cannot be restored in any way.

Because of the intrinsic properties of the chromogenic material, such irreversible color transition is persistent, e.g., months to years (beyond the lifetime/scope of the device); without requiring further energetic input and absolutely impossible to manipulate, i.e., material becomes chemically inert.

This irreversible chromogenic material could be very advantageous for application as visual display for tags and labels: tickets, e.g., events, transport, etc.; product, security and price labels; cards, e.g., business, gift, credit and debit cards; personalization of objects, and the like.

Further, this voltage triggered color change could be applied in response to a stimulus when the display is connected to a sensing platform within a smart label. Thereby, applied irreversible chromogenic systems are provided that, reacting towards a stimulus, e.g., thermal, chemical, redox etc., will be responsive through the signaling of a colored message.

According to the invention, there is provided a matrix for use in irreversible electrochromic devices, e.g., ECDs for labels and tags; wherein the matrix comprises an organic (i.e., metal-free) catechol-based molecule, which irreversibly changes its properties upon application of a potential (< 3 V).

When employed in ECDs, said molecule will irreversibly change its properties upon application of a voltage. Said irreversible changed property is immediately visually recognized by users without any technical equipment. Said irreversible altered property may be a change of color and/or transparency.

According to one embodiment of the invention said molecule is dopamine or another organic catechol derivative. Specifically, said molecule is dopamine.

None of the currently employed electrochromic materials are naturally abundant, sustainable (i.e., biodegradable, soluble in water, etc.) and economically advantageous as dopamine.

Moreover, dopamine is known to undergo oxidative self-polymerization in aqueous solutions yielding dark films through a versatile chemistry, including: covalent cross-links and non-covalent interactions such as hydrogen bonds and cation-π interactions. Said "hybrid polymerization" is irreversible and pristine dopamine cannot be recovered (i.e., the initial transparent color cannot be restored).

According to one embodiment of the invention, the archetypal dopamine color change is harnessed in electrochromic devices by preventing random self-oxidation of the dopamine (i.e., use of antioxidant). Instead, the change of color on demand is activated only upon exerting an electrically induced chemical stimulus (i.e., oxidation of dopamine).

According to one embodiment of the invention, said irreversible chromogenic material can be used to produce an EC device. In this case the irreversible chromogenic material will only once and permanently change its color in response to an electrically-induced chemical stimulus, from transparent to dark brown.

The EC device comprises a repository, at least two electrodes, optionally a spacer and/or at least one electric contact. The electrodes may be for example PET-ITO electrodes.

A further embodiment relates to the matrix as described herein, wherein said matrix additionally comprises an antioxidant.

A further embodiment relates to the method for manufacturing the device, comprising:
a) providing a repository between two electrodes;
b) charging the repository with a material comprising an organic catechol-based molecule;
c) providing at least one electric contact; and
d) sealing the smart label.

To decrease the environmental impact and contain the costs of production of said devices, high-volume, zero-waste and low-cost processing methods can be exploited. The devices may be for example produced by 2D, e.g., blade casting, spray casting, inkjet printing, screen printing, etc.; or 3D, e.g., 3D-printing; additive manufacturing technologies. Highspeed processes such as roll to roll processes for flexible substrates could be envisaged for scaling up purposes. Since these displays comprise several layers of different materials (e.g., conductive layer, electrochromic film/electrolyte, etc.), for each layer the best deposition methodology will be employed.

One embodiment of the invention relates to the integration of the irreversible ECDs into tags and labels.

A further embodiment relates to the integration of the ECD into smart labels, for monitoring quality and/or safety standards during transport, stocking, and handling of an object. The object may be a drug, a food, a beverage, biological samples, a specimen of art, sensible specimens for analysis, and the like.

### Brief description of drawings

Fig. 1: Dopamine reactivity scheme.
Fig. 2: Top view of an ECD in all its components and the steps in chronologic order to prepare the prototype: (1) double-layer adhesive attach on the PET-ITO substrate, (2) tape security cover remotion, (3) substrate cut, (4) placement of needle with the solution inside the square on the adhesive, (5) device closing, (6) solution injection, (7) needle removal, (8) copper contact attachment and final finish.
Fig. 3A: Transmittance in the visible range of the same label before (dash line) and after (solid line) the label activation through applied voltage lasted for 600 seconds. This trigger changes the transmittance from above 80% to less than 10%.
Fig. 3B: Picture of the device related to the spectra reported in Fig 3A. Can be seen an important color transition from transparent to black.
Fig. 4: Trigger test carried out on 11 samples prepared with a solution of dopamine 10 g/L with 5 g/L of antioxidant (sodium metabisulfite) in PBS at pH 7.4. The transmittance at 600 nm after label activation, 600 seconds, is plotted versus the applied voltage.
Fig. 5: Series of photographs taken of the 12 analyzed devices. The photos were captured at the end of the applied voltage lasted 600 seconds.
Fig. 6: Frames captured from videos of two different devices subjected respectively to voltages of 1.5 V and 3.0 V. The "x" axis shows the seconds at which the frames of each label were captured.
Fig. 7A: Comparison between two devices prepared together (day 0). The triangle line shows the device prepared with antioxidant, while the circle the device without it. The transmittance was measured daily, and the value collected at 600 nm was plotted versus time.
Fig. 7B: Stability analysis carried out over 100 days, on a label prepared with a solution of dopamine and antioxidant.
Fig. 8: Photographs taken daily for a period of 1 month of two devices prepared with dopamine 10 g/L in PBS pH 7.4 without (above) and with (below) the antioxidant. The numbers reported on each photo indicate the timepoint. Day after day the sample's color prepared with only dopamine becomes darker, due to the spontaneous oxidation of it. This effect does not happen with the use of the antioxidant.
Fig. 9: Transmittance at 600 nm plotted versus the time expressed in days for 9 devices prepared together (dopamine 10 g/L + Na₂S₂O₅ 5 g/L in PBS at pH 7.4, and dopamine 10 g/L without Na₂S₂O₅). Every circle and triangle symbol identifies the minimum transmittance reached by each label after applied voltage (1.5 V).
Fig. 10: Pictures of each device after the label activation through applied voltage related to the experiment in Fig. 9.
Fig. 11: Transmittance at 600 nm after the label activation (600 seconds) plotted versus the time expressed in days of 9 samples subjected to 1.5 V (square) and 3.0 V (circle). All the samples were prepared using a solution of dopamine 10 g/L + Na₂S₂O₅ 5 g/L in PBS at pH 7.4.
Fig. 12:XPS analysis of a reference electrode material (PET-ITO), a sample prepared only with the electrolyte (PBS pH 7.4), and a sample including the active material with the antioxidant (dopamine 10 g/L + Na₂S₂O₅ 5 g/L in PBS at pH 7.4). The devices prepared with PBS and dopamine were subjected to 1.5 V for 600 seconds. The analysis was carried out on the counter electrodes in three positions (red dots in the picture).
Fig. 13: Molecular structure of 5-nitrodopamine.
Fig. 14: Trigger test carried out on 8 devices prepared with a solution of 5-nitrodopamine 1 g/L in PBS at pH 7.4. Transmittance at 600 nm was plotted versus the applied voltage.
Fig. 15: Series of photographs taken of 8 devices prepared with 5-nitrodopamine 1 g/L in PBS at pH 7.4 after the activation at different voltages (1.5 V - 5.0 V) for 600 seconds.
Fig. 16: Molecular structure of 2-chlorodopamine.
Fig. 17: Trigger test carried out on 11 devices prepared with a solution of chlorodopamine 10 g/L with 5 g/L of Na₂S₂O₅ in PBS at pH 7.4. The transmittance at 600 nm was plotted versus applied voltage.
Fig. 18: Series of pictures taken on 10 devices prepared with 2-chlorodopamine 10 g/L with 5 g/L of Na₂S₂O₅ in PBS at pH 7.4 activated at different voltages (0.75 V - 3.0 V) for 600 seconds.
Fig. 19: Frames captured from videos of two different devices prepared with 2-chlorodopamine 10 g/L with 5 g/L of Na₂S₂O₅ in PBS at pH 7.4 and subjected to 1.5 V and 3.0 V. The "x" axis shows the seconds at which the frames of each device were captured.
Fig. 20: Molecular structure of 5-methoxydopamine.
Fig. 21: Trigger test carried out on 6 devices prepared with a solution of 5-methoxydopamine 10 g/L with 5 g/L of Na₂S₂O₅ in PBS at pH 7.4. The transmittance at 600 nm was plotted versus applied voltage.
Fig. 22: Series of pictures taken on 6 devices prepared with 5-methoxydopamine 10 g/L with 5 g/L of Na₂S₂O₅ in PBS at pH 7.4 activated at different voltages (0.5 V - 3.0 V) for 600 seconds.
Fig. 23: Frames captured from videos of two different samples 5-methoxydopamine 10 g/L with 5 g/L of Na₂S₂O₅ in PBS at pH 7.4 activated at 1.5 V and 3.0 V. The "x" axis shows the seconds at which the frames of each device were captured.
Fig. 24: a) Transmittance at 600 nm as function of time recorded during the activation process, lasted 600 seconds at 1.5 V, of three displays series based on agar-agar, corn starch and PEG 2000 dopamine semi-solid formulations. The transmittance is compared with the liquid PBS formulation used as benchmark. b) Average charge consumption and coloration efficiency values calculated for each display series. c) Picture of the displays produced with the three dopamine semi-solid formulations acquired at the end of the activation process, displaying the change of color.

### Description of Embodiments

The present invention relates to irreversible electrochromic matrixes to be employed in electrochromic devices, such as for example ECDs for labels and tags.

A suitable organic compound, herein also referred to as molecule, which irreversibly alters its appearance, e.g., changes its color, transparency, and the like; is required for providing an irreversible read out in the electrochromic device. An irreversible alteration of its appearance means that the initial state of the molecule once altered cannot be restored. Thus, the initial state of the EC device before application of an electrically-induced chemical stimulus has occurred cannot be set back by any means.

The molecule used as irreversible chromogenic material may be selected from the group of dopamine, a dopamine derivative, or an organic (i.e., metal-free) catechol-based structure. Catechol is also known as pyrocatechol or 1,2-dihydroxybenzene and belongs to the group of phenolic compounds. Catechol moieties are also found widely within the natural world.

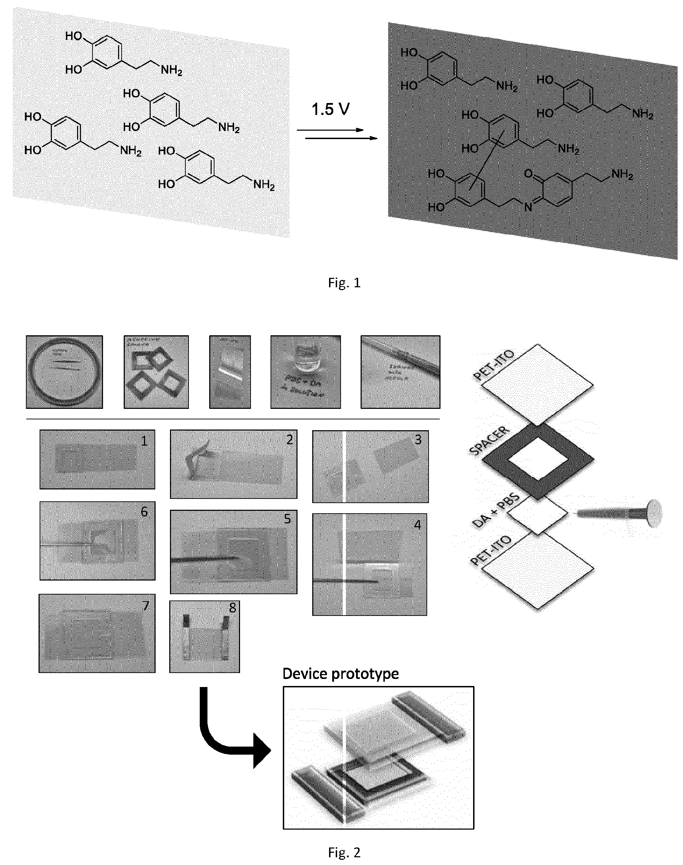

Dopamine (DA) is a neurotransmitter that plays several important roles in the brain and body. Dopamine is a small versatile molecule used for various biotechnological and biomedical applications. In addition to its biological role, dopamine can undergo oxidative self-polymerization/aggregation to yield polydopamine (PDA), a robust universal coating material. Dopamine is an organic chemical of the catecholamine and phenethylamine families. In Nature, the oxidative transformation of dopamine (DA) to polydopamine (PDA) is accompanied by the irreversible transition from a transparent (i.e., molecular phase) to a dark and opaque state (i.e., polymeric/aggregate phase) (see Fig. 1).

Other molecules with similar properties may be used, e.g., dopamine derivatives such as chloro-, nitro- or methoxydopamine, as well as catechol and other catechol derivatives.

In one embodiment, an aqueous formulation of the molecule is comprised in the repository of an electrochromic device. The formulation may be a solution, semi-solid or a solid depending on its application. Besides the chromogenic material, to avoid uncontrolled oxidative self-polymerization of the molecule, e.g., dopamine, the formulation according to the invention may comprise an antioxidant. Any antioxidant which effectively reduces and/or prevents self-polymerization of the molecule, e.g., dopamine; may be employed. A suitable antioxidant is for example, sodium metabisulfite (Na₂S₂O₅). The formulation further comprises an electrolyte, e.g., phosphate buffer saline (PBS). To modulate the viscosity of the formulation an additive, e.g., gelling agent, can be used.

According to one embodiment, these irreversible EC devices comprise a repository. The repository may be made of any transparent material, e.g., transparent polymers, paper, glass, etc.

Suitable transparent polymers may be selected from the group of polycarbonates (PCs), polymethyl methacrylate (PMMA or acrylic glass), polyethylene terephthalate (PET), amorphous co-polyester (PETG), polyvinyl chloride (PVC), liquid silicone rubber (LSR), cyclic olefin copolymers (COC), polyethylene (PE), ionomer resin, transparent polypropylene (PP), fluorinated ethylene propylene (FEP), styrene methyl methacrylate (SMMA), styrene acrylonitrile resin (SAN), crystal-clear polystyrene, transparent ABS (made up of three monomers: acrylonitrile, butadiene and styrene), or the like.

The electrolyte for the formulation can be water-based, thanks to the solubility of dopamine in this medium. To control the pH of the formulation (e.g., important parameter for the speed of the hybrid polymerization), we employed as electrolyte PBS (phosphate buffer saline; pH = 7.4). Other buffering agents (e.g., KH₂PO₄, CHES, Borate, TAPS, TRIS, etc.) could be employed. Additional salts (e.g., LiCl, NaCl, KCI, CaCl₂, etc.) could be dissolved in the electrolyte to further improve the electrical conductivity of the formulation.

For semi-solid gel like formulations, compatible with industrially relevant manufacturing technologies (e.g., blade-casting, screen-printing), the viscosity of the formulation needs to be adjusted, for example by introducing a gelling agent. The formulation may comprise as gelling agent agar-agar, starch, PEG 2000, xanthan gum, guar gum, konjac gum, cellulose gum, xylan, PAM, PAA, PVA, PVP (polyvinylpyrrolidone), animal gelatin (porcine skin), carrageenan, sodium alginate, etc. These gelling agents may be employed for the production of the water based and sustainable manufacturable semi-solid dopamine formulations.

The device according to the invention may comprise a spacer. Again, the spacer may be made of any suitable material. For example, the spacer may be made of an adhesive material.

In an embodiment of the invention the electrochromic device comprises at least two electrodes.

Electrodes used according to the invention generally comprise a transparent electrode deposited onto a substrate. The substrate may be a suitable layer such as for example plastics, glass, paper etc. The transparent electrode comprises one or more transparent conductive layers comprising, but not limited to, indium tin oxide (ITO), zinc oxide (ZnO), tin oxide (SnO), etc. If the devices architecture were to change to coplanar, also non transparent and/or colored electrodes could be employed (e.g., graphene, CNTs, metal layers, PEDOT:PSS, etc.). According to one embodiment, the device comprises at least two electrodes, e.g., PET-ITO (polyethylene terephthalate-indium tin oxide) electrodes.

Electric contacts used according to the invention generally comprise electrically conductive material, typically metal. Examples of such electric contacts may be made of copper or any typical material used for electrodes.

A further embodiment relates to the manual method for manufacturing the irreversible electrochromic device. The method comprises the provision of a repository between at least two electrodes, charging the repository with an electrolyte solution comprising a molecule which changes its property upon a stimulus irreversibly; providing at least one electric contact; and sealing the device.

Industrial methods for the production of ECDs comprise, among others, doctor blade, screen printing, spray coating, inkjet printing, and gravure printing. Electrochromic materials need to be formulated as printable inks (e.g., viscosity, thixotropy, etc. requirements dictated by the manufacturing platform) for integration in industrial production processes. For example, the doctor-blade process is a technique used to form films with well-defined thicknesses with low material loss (< 5%). It works by placing a sharp blade at a fixed distance from the surface that needs to be covered. For this process, the electrochromic formulation may be a viscous semi-solid or a gel-like material. Such "paste-like" coating solution is placed in front of the blade and the blade moved across in-line with the surface, creating a uniform film.

Utilizing such additive manufacturing technologies, the irreversible EC devices can be made thin, flexible, robust and may be directly integrated into objects, e.g., labels and tags, etc. already upon finalization of their production.

The device design, components and manufacturing processes have to be adapted to the most suitable configuration for each targeted application, to enhance final performance or facilitate integration of the EC device.

These inexpensive, sustainable EC devices could further be used for applications requiring irreversible information to be displayed without requiring cyclability, for example as ECDs in disposable labels and tags. Irreversible means that the ECD changes the state when activated the first time, and that the change of color is persistent (e.g., months to years, abundantly beyond the timespan of the product) without requiring additional energetic inputs and clearly visible by visual observation.

The power for the activation of the indicator may come from integrated batteries or solar cells. Wireless communication such as optical, sonar or radio frequency communication, could also energize these displays and the associated electronics, as well as interconnect them with the user and or the environment. The power to activate the display is limited (typically applied potentials < 3 V).

One may activate these labels and tags wirelessly, or these may comprise integrated sensors, or a sensor feed may be provided to them. These sensors may be looking at/for changes in e.g., temperature, pressure, pH, optical absorption, weight, moisture, mechanical modulus, gas concentration, chemicals concentration, etc. These labels and tags could also provide a time dependent irreversible visual indication.

These devices may be irreversible; that is, once activated they change color providing a permanent visual output, which is sustained without further energetic inputs. The change of color is associated to a transformation of the molecular material which is accompanied by its chemical inactivation, e.g., material becomes chemically inert and non-electrically conducting; thus, the material cannot be brought back to the initial molecular state. The advantage of such chemical irreversibility lies in the impossibility of modifying, counterfeiting or losing the information reported by the irreversible visual indicator.

For example, applications such as tickets, e.g., events, transport; may have a display that presents a unique output, e.g., journey selected, type of subscription, which needs to be retained without power until the expiration date.

The irreversible EC devices according to the invention may be further integrated with a sensing platform within "smart" labels and tags, to act as accessible and straightforward visual indicators. For monitoring/logistics application, a smart label applied to the product package comprising the irreversible chromogenic material may change color when the package is exposed to a harmful stimulus for the monitored object during transportation, e.g., temperature, humidity, etc., picked up by an integrated sensor.

The use of the irreversible "smart" labels and tags would not be restricted to specific objects. Any object which needs to be monitored at a certain point during its lifetime could be equipped with a smart label. Non-limiting examples of such objects are biological samples, e.g., blood, urine, saliva, etc.; drugs, e.g., antibiotics, injections, etc.; food, e.g., meat, fish, cheese etc.; beverages, e.g., wine, milk, fruit juice, etc.; a specimen of art, e.g., paintings, sensible specimens for analysis, etc.

### Examples

The Examples which follow are set forth to aid in the understanding of the invention but are not intended to, and should not be construed to limit the scope of the invention in any way. The Examples do not include detailed descriptions of conventional methods. Such methods are well known to those of ordinary skill in the art.

### Irreversible electrochromic device manual assembly

In Fig. 2 the procedure carried out to produce the EC device is described. For the assembly, a copper tape is used as electric contact, and an adhesive spacer is integrated to create an empty volume to contain the DA solution, separating the two PET-ITO electrodes. The characteristics of the prototype are: Inner square dimension: 1 cm² (base) x 0.5 mm (height); Inner volume: 0.05 cm³ = 0.05 mL required; Adhesive frame: 0.5 cm (width).

### Dopamine

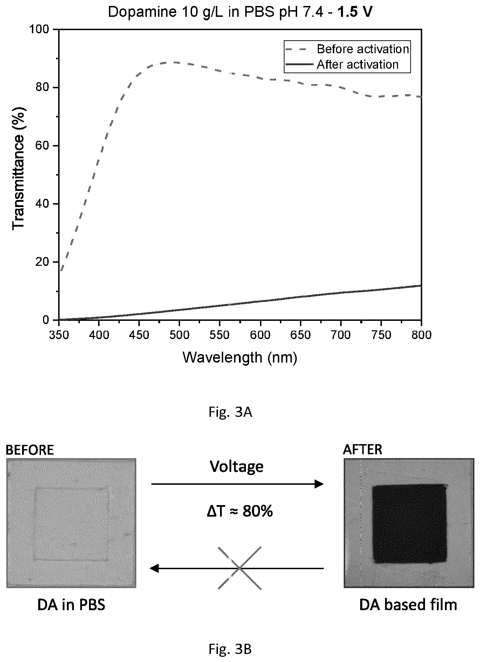

DA is an irreversible chromogenic material which allows the device to change color from transparent to dark irreversibly (Fig. 1). The formation of the dark DA-based chemically inert material guarantees persistence of the color change without requiring further electrical input. In Fig. 3A the UV-Vis spectra registered on a device before (dash line) and after (solid line) the application of a potential of 1.5 V for 600 seconds. The variation of the transmittance (ΔT, ~80%) was calculated at 600 nm. This wavelength was chosen because it is in the middle of the visible range and shows an average ΔT, representing the phenomenon as truthfully as possible with respect to how the eye would experience the change of color. In Fig. 3B this variation of transmittance can be appreciated directly on the label.

### Trigger test

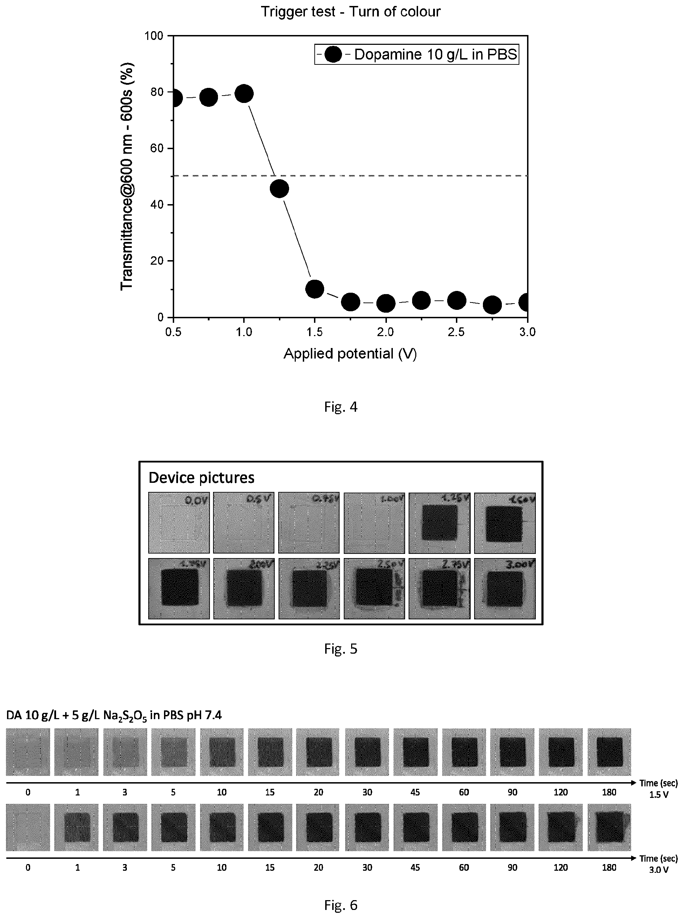

Fig. 4 reports a trigger test carried out on the DA devices to understand the minimum voltage threshold required to trigger the change of color. Identifying this threshold voltage is essential to define the minimum operative voltage required for the device to function.

Eleven identical devices were prepared using a solution of 10 g/L of dopamine with 5 g/L of sodium metabisulfite (Na₂S₂O₅) in PBS (phosphate buffer saline) at pH 7.4. This antioxidant, Na₂S₂O₅, has been included in the formulation of the electrolyte (aqueous phosphate buffer, PBS) to stabilize the molecular form of the DA, which would otherwise undergo self-oxidation turning into a dark DA-based material. Each device was subjected to a different voltage ranging from 0.50 V to 3.00 V with 0.25 V as increment, for a period equivalent to 600 seconds. In Fig. 4 the transmittance value of each label extrapolated from each spectrum at 600 nm are plotted as a function of the applied voltage. As it can be seen, the first four tested voltages (0.00 V, 0.50 V, 0.75 V and 1.00 V) have not an energy high enough to trigger the color change (final transmittance ca. 80%). In addition, from the first three pictures shown in Fig. 5, it is clear that the labels remain colorless. Starting from 1.25 V it is possible to appreciate a change of color in the devices. Increasing the voltage further increases the speed of the color change. Exposure to voltage values > 2.00 V leads to artefacts and halos surrounding the square containing the dopamine solution, attributable to the degradation of the PET-ITO. For each device the reported picture was taken after conclusion of the experiment (600 s).

### Color transition rate

Two voltages, 1.50 V and 3.00 V, were applied to two identical devices prepared with a solution of DA 10 g/L with Na₂S₂O₅ 5 g/L in PBS pH 7.4. The entire process, lasting 180 seconds, was filmed and 13 frames were extracted for both voltages used. The pictures were aligned on a horizontal axis to show the color evolution in time. As shown in Fig. 6, higher voltages provide higher current, and this influences the time required to achieve the color transition.

### Stability test

The need for stability control on DA's devices arises from the intrinsic mechanism of spontaneous oxidation of the dopamine molecule. Although it is exactly this phenomenon that guarantees the color change from transparent to dark, its control is essential to avoid undesired activation of the device. Reduction of the amount of free monomer available in solution would in fact lead to an important lessening of the efficiency of the color change of the device (i.e., ΔT decrease between initial and final state), possibly becoming practically negligible to the naked eye. To prevent this detrimental phenomenon sodium metabisulfite (Na₂S₂O₅) was included as an antioxidant in the formulation of the electrolyte.

To analyze the stability of the devices, stability tests were carried out by recording the UV-Vis absorption spectra of the assembled devices with and without Na₂S₂O₅, over a period of 30 days, monitoring the change in transmittance. The devices were prepared at the same time:
- x1 prepared with a solution of DA 10 g/L in PBS pH 7.4;
- x1 prepared with a solution of DA 10 g/L + Na₂S₂O₅ 5 g/L in PBS pH 7.4.

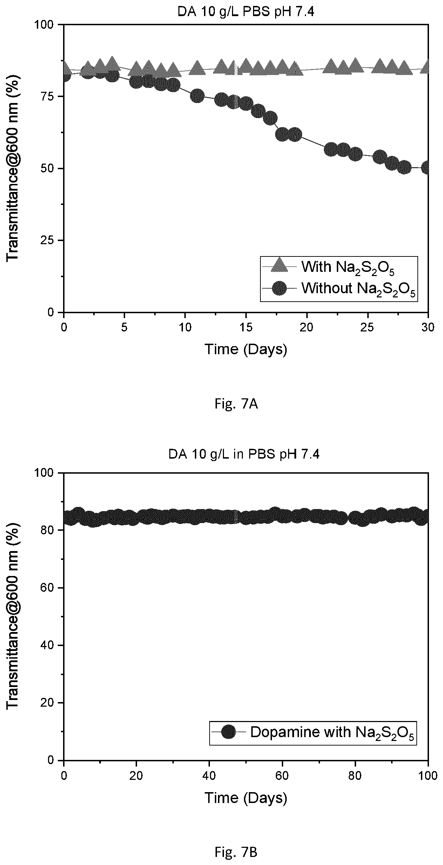

The graph in Fig. 7A shows the extrapolated transmittances at 600 nm versus time expressed in days. From a comparison between the two devices, it is clear that the use of Na₂S₂O₅ prevents the decrease of transmittance, otherwise observed for the DA device prepared without antioxidant. This decrease causes a spontaneous color change, significantly lowering the visual indication efficiency upon activation of the device. In the case of the device formulated with the antioxidant, the transmittance remains constant for a period up to 100 days (Fig. 7B), without presenting detectable color changes, indicating stability of the formulation.

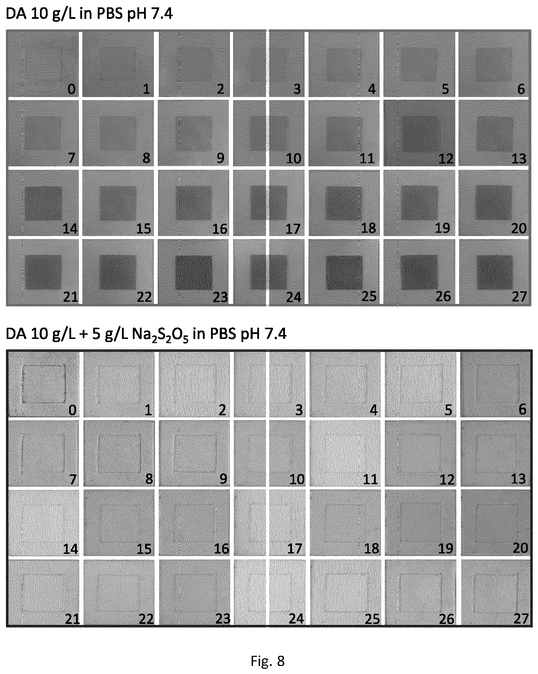

In Fig. 8 the timeline of a device prepared without the use of the antioxidant is shown. As can be immediately observed, the color perceived with the naked eye changes going from transparent to brown. This is followed by a decrease in transmittance as shown in Fig. 7A. This phenomenon is completely spontaneous and due to the presence of oxygen and the basic aqueous environment.

### Time dependent efficiency test

To evaluate the effect of dopamine self-oxidation onto the color changing/visual indication efficiency, a series of devices with and without antioxidant were prepared on the same day and equal conditions and then subjected to a 1.5 V at different time points. The efficiency of the color transition is calculated based on the ΔT obtained. Daily one sample from each category was subjected to an applied voltage of 1.5 V for 600 seconds and its transmittance recorded at 600 nm. The labels were all produced at the same time with equal conditions:
- x9 devices prepared with a solution of DA 10 g/L in PBS pH 7.4;
- x9 devices prepared with a solution of DA 10 g/L + Na₂S₂O₅ 5 g/L in PBS pH 7.4.

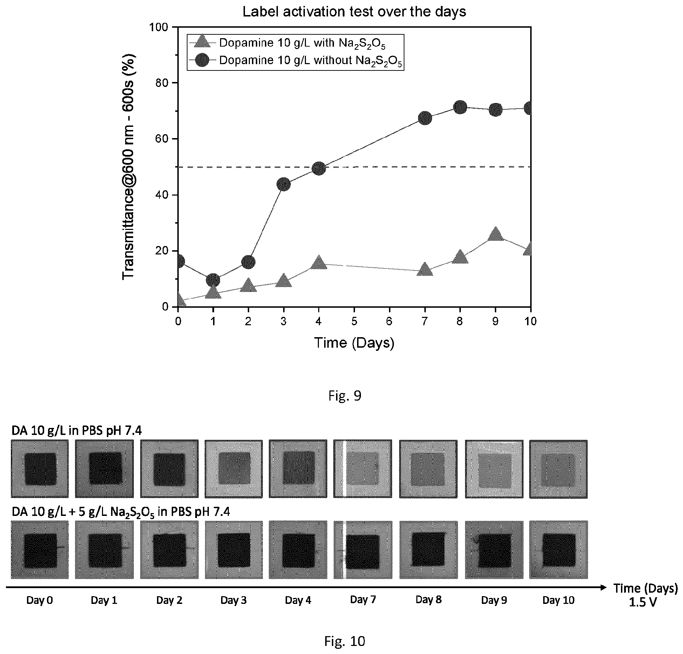

Fig. 9 shows a comparison between the devices prepared with and without antioxidant. It is evident how the efficiency of the color change for devices prepared without the antioxidant drastically decreases over time until it becomes impossible to appreciate the color change by naked eye from day 7 since their preparation onwards.

In the case of the devices prepared with the antioxidant, it is possible to preserve the monomer in solution. Even after 80 days, the transmittance of the final state reaches a value of ca. 20% (i.e., still appearing transparent), an appreciable and still effective value enabling visual identification (initial transmittance, from Fig. 7A = 80 %; ΔT = 60 %). In Fig. 10 the related pictures can be appreciated in order to understand the aforementioned behavior.

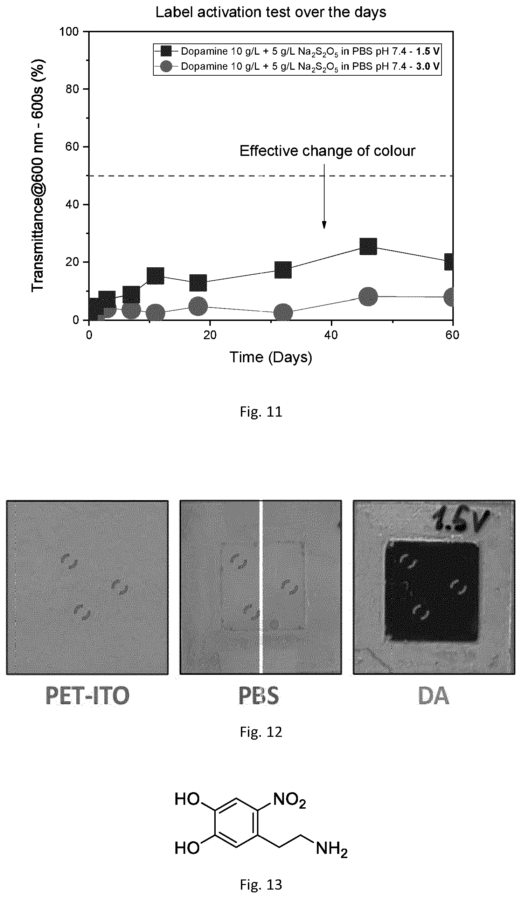

Fig. 11 shows a comparison between the application of 1.5 V and 3.0 V. Increasing the applied potential further enhances the ΔT detected for these devices. Bringing the final transmittance close to 0, up to 60 days after the preparation of the devices. In fact, the transmittances that can be reached applying 3.0 V are steadily ~10 % lower than those obtained with 1.5 V.

### X-ray photoelectron spectroscopy (XPS) analysis

The XPS analysis is an analytical technique able to evaluate the elemental composition of a material, expressed as atomic percentage. The purpose of the analysis is qualitatively proving the presence of the DA layer on the electrode surface, after the triggering of the irreversible chromatic change. In Table 1 the results of the analysis performed on 3 samples are reported: pristine substrate, substrate treated with the electrolyte (PBS) and the substrate coated with the dark polydopamine layer after triggering of the color change. The choice of atoms subjected to analysis arises from the atomic composition of the materials involved. Indeed, detection of the presence of carbon and nitrogen atoms on the surface of the electrode would be a strong confirmation of the presence of the PDA film (i.e., those signals are not detected for the electrode alone, presenting only the signals of the ITO: In, Sn, O).

The first sample analyzed is the reference substrate, the ITO layer deposited on PET. This substrate was not subjected to any voltage before undertaking the analysis. Further, the electrode of a device containing only PBS and of one containing a solution of 10 g/L of DA in PBS were subjected to an applied voltage of 1.5 V for 600s. These devices were hence opened and the counter electrode (transparent in PBS and dark in DA) analyzed. From the data reported in Table 1, it is clear that while for the reference electrode and the PBS sample the signals of ITO are dominant, in the DA sample a prominent increase in the atomic percentage of C and N was detected on the surface of the electrode, 72.05 and 7.78 % respectively (14.06 and 0.68 in the PBS sample). This confirms the presence of the PDA film.

**Table 1**

| | **C (1s) %** | **N (1s) %** | **O (1s) %** | **In (3d) %** | **Sn (3d) %** |
|---|---|---|---|---|---|
| **PET-ITO** | 2.88 ± 0.14 | 0.16 ± 0.18 | 59.88 ± 0.41 | 32.92 ± 0.35 | 13.34 ± 0.12 |
| **PBS** | 14.06 ± 6.78 | 0.68 ± 0.02 | 55.14 ± 3.46 | 21.98 ± 2.77 | 12.27 ± 0.30 |
| **DA** | 72.15 ± 0.02 | 7.78 ± 0.01 | 17.91 ± 0.09 | 0.02 ± 0.01 | 0.03 ± 0.01 |

The data were obtained through an average of 3 measurements performed on the 3 substrates

Table 1 depicts the relative atomic percentages recorded on an average of 3 points for each sample. The following elements were analyzed: C, N, O, In, Sn.

### 5-Nitrodopamine

5-Nitrodopamine (NO₂DA) was also tested as chromogenic material for the label (Fig. 13). A color change trigger test was carried out for this molecule for determining which voltage and therefore what energy is required for triggering the color change. Notably, the color of this molecule is yellow due to the presence of the nitro group.

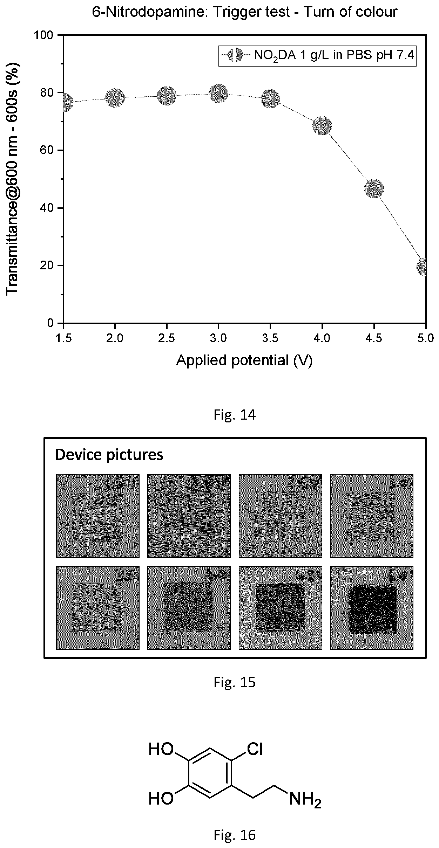

For this analysis (Fig. 14), a 1 g/L NO₂DA solution in PBS pH 7.4 was used. Due to the higher stability of the molecule towards self-oxidation no antioxidants were used. 8 labels were prepared and subjected to a potential ramp from 1.5 V up to 5.0 V with an increase of 0.5 V. The transmittance at 600 nm was recorded as a function of the applied voltage. The choice of such a high voltage, in comparison to DA, arises from the lower reactivity of NO₂DA, which did not change color up to 3.5 V. The transmittance begins to drop starting from 4.0 V.

### 2-Chlorodopamine

2-Chlorodopamine (CIDA, Fig. 16) appears prone to self-oxidation, exactly as DA. For this reason, all the labels were prepared with the antioxidant for testing its electrochromic behavior.

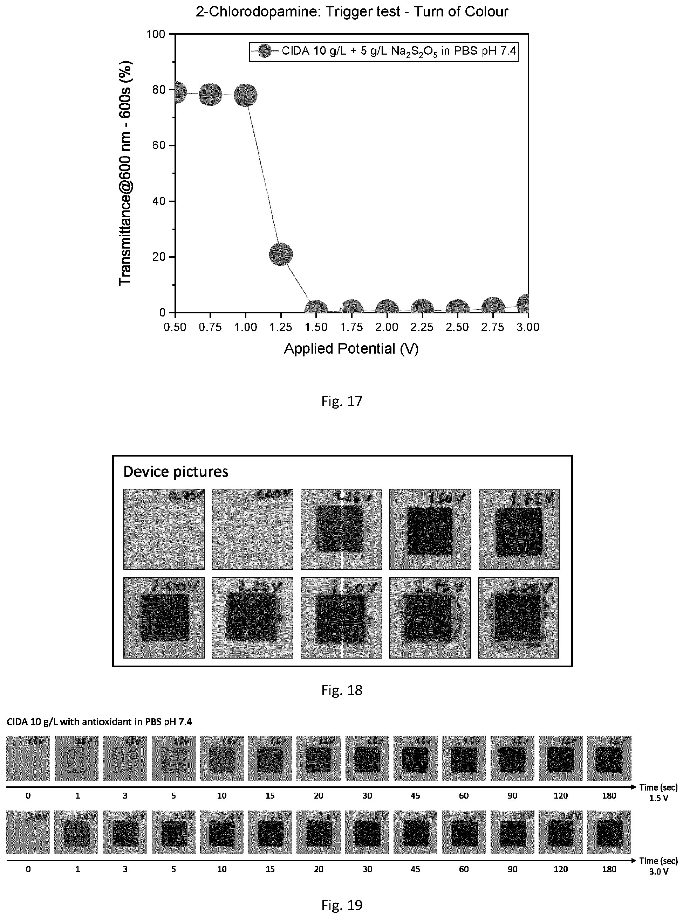

In Fig. 17 the results of the color trigger test are shown. Again, the transmittance recorded at 600 nm, at the end of the process which lasted 600 seconds, was reported as a function of the applied voltage (Fig. 18). For both dopamine and CIDA energy above 1.0 V is necessary to trigger the color change. From 1.25 V the transmittance starts to decrease and from 1.5 V it reaches values next to 0%. As for DA, with voltages higher than 2.0 V artefacts and halos begin to form outside the square containing the solution.

The color change speed turns out to be comparable to DA. Fig. 19, shows the frames captured by the videos recorded at 1.50 V and 3.00 V. Higher voltages lead to a faster color change.

### 5-Methoxydopamine

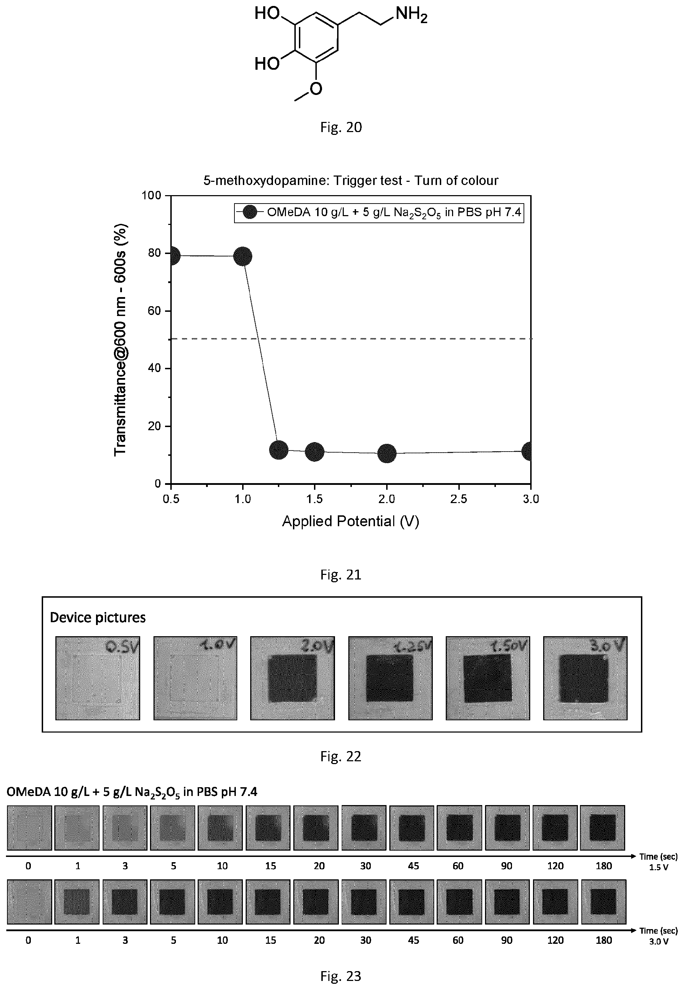

5-Methoxydopamine (OMeDA, Fig. 20) is the most reactive to oxidation phenomena due to the large activation of the aromatic ring donated by the substituent group. Because of this effect, as with DA and CIDA, all the labels were prepared with the antioxidant.

In Fig. 21 is reported the standard test carried out for the previous molecules. For the analysis, 6 devices were prepared with 10 mg of OMeDA and 5 mg of Na₂S₂O₅ in PBS at pH 7.4. To each devices a different voltage was applied starting from 0.5 V to 3.0 V as reported in the graph and pictures (Fig. 22). As can be seen from the transmittance at 600 nm taken at the end of the process there is a threshold to allow the change of color to occur. Already at 1.0 V, a steep transmittance drop is registered reaching a value close to 0%, associated with the colorless to black color change. The ΔT registered at the end of the process does not change increasing the voltage.

From Fig. 23 it can be seen that there are no improvements on the color change speed, as compared to DA.

### Dopamine hydrogel formulation and blade casting-based device assembly

The three formulations were prepared for optimizing the viscosity of the dopamine-based electrochromic matrix for the doctor-blade technology introducing a gelling agent according to the following protocol:
- Agar-agar: in a beaker 10 mL of PBS and 100 mg of agar-agar were dissolved through stirring and increasing the temperature until boiling. Subsequently, once it had cooled to about 60 °C, 100 mg of dopamine and 50 mg of Na₂S₂O₅ were added. Pouring temperature 50 °C.
- Corn starch: in a beaker, 10 mL of PBS and 500 mg of corn starch were dissolved by stirring and increasing the temperature until boiling. Subsequently, once it had cooled to about 60 °C, 100 mg of dopamine and 50 mg of Na₂S₂O₅ were added. Pouring temperature rt.
- PEG 20000: in a beaker, 10 mL of PBS and 2 g of PEG 20000 were dissolved by stirring. 100 mg of dopamine and 50 mg of Na₂S₂O₅ were then added. Pouring temperature rt.

**Table 1**

| | **Gelling agent (mg)** | **PBS (mL)** | **Dopamine (mg)** | **AntiOX (mg)** | **Working T (°C)** |
|---|---|---|---|---|---|
| **Agar agar** | 100 | 10 | 100 | 50 | 50 |
| **Corn Starch** | 500 | 10 | 100 | 50 | 25 |
| **PEG 20000** | 2000 | 10 | 100 | 50 | 25 |

The dopamine hydrogel formulations were poured onto a conductive PET-ITO substrate (i.e., electrode) and the coating of the formulation performed with a blade-to-substrate height of *ca.* 300 µm. The obtained electrochromic film was then sealed between two layers of PET-ITO employing a laminator with roller thickness of 350 µm.

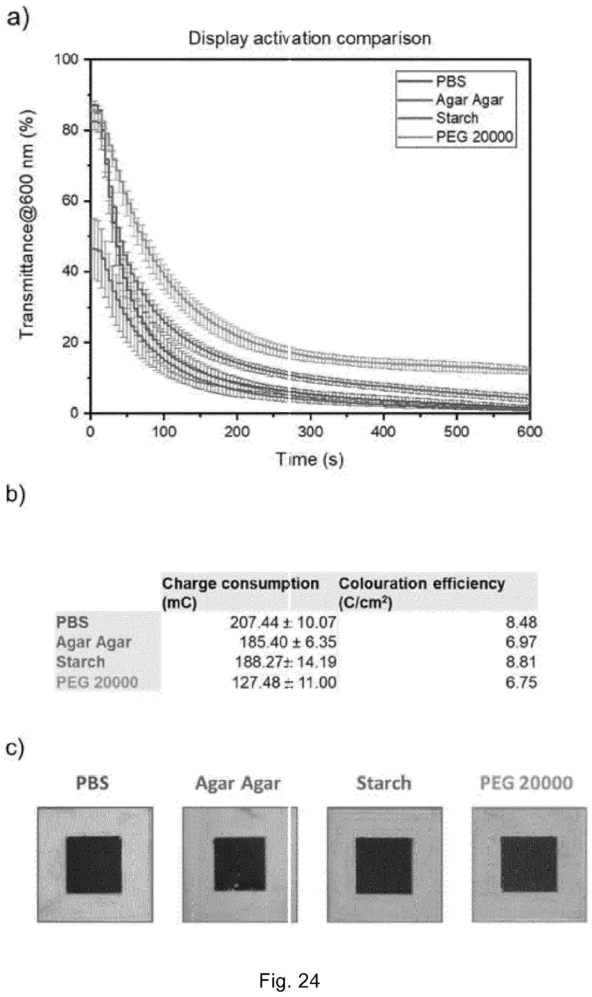

The devices prepared with the different hydrogel-based dopamine formulations were tested upon voltage application to evaluate their switching performance. As shown in Fig. 24, upon application of 1.5 V for 600 seconds all the displays switched to the expected dark state, without exception.

The initial transmittances of these displays mostly overlap with the liquid PBS formulation (used as a benchmark), except for the ECDs prepared with starch, characterized by a whitish color resulting from light scattering phenomena. Upon activation with 1.5 V, the transmittance decreases exponentially with time for all the devices, reaching for agar-agar and starch values similar to those of the PBS formulation within the 600 s of the analysis. Considering the ΔT trace, the formulation with the behavior closest to the liquid formulation resulted the agar-agar. The consumed charge and coloration efficiency are also comparable throughout the series. Displays prepared with agar-agar moreover form a fairly solid and highly transparent gel which reduces material leakage during display lamination

## Claims

1. Use of an electrochromic matrix in an electrochromic device, wherein the matrix comprises an organic metal free catechol-based molecule which irreversibly changes its properties upon application of a stimulus.

2. The use according to claim 1, wherein said stimulus is an electrically-induced chemical stimulus.

3. The use according to claim 1, wherein the irreversible changed property is visually recognized without any technical equipment.

4. The use according to claim 3, wherein the irreversible changed property is a change of color and/or transparency.

5. The use according to claim 3, wherein the irreversible changed property is sustained without further electrical input for at least one month or even longer.

6. The use according to any of claims 1 to 5, wherein said catechol-based molecule is dopamine or a dopamine derivative.

7. The use according to claim 6, wherein the organic catechol-based molecule is dopamine.

8. The use according to any of claims 1 to 7, wherein said matrix further comprises an antioxidant.

9. The use according to any of claims 1 to 8 in an electrochromic device comprising a repository, at least two electrodes, optionally a spacer and/or one or more electric contact are comprised.

10. A method for manufacturing an electrochromic device, comprising:
a) providing a repository between two electrodes,
b) charging the repository with an electrochromic matrix comprising an organic metal free catechol-based molecule which irreversibly changes its properties upon application of a stimulus;
c) optionally providing at least one electric contact; and
d) sealing the device.

11. The method according to claim 10, wherein at least one component of any one of steps a) to d) is produced by 2D printing, 3D printing, or by additive manufacturing technologies employing a solid or semi-solid gel like matrix formulation.

12. The method for manufacturing an electrochromic device according to claim 10 or 11, wherein the organic catechol-based molecule is dopamine or a dopamine derivative.

13. The method according to any of claims 10 to 12, further comprising an energy storage device, and/or an interactive or sensing platform.

14. Use of an electrochromic device obtainable by a method according to any of claims 10 to 13 as a tag or a label.

15. The use according to claim 14, wherein said electrochromic device is used as a "smart" tag or a label to monitor the conditions of a good during transport, stocking, and handling.

## Patentansprüche

1. Verwendung einer elektrochromen Matrix in einer elektrochromen Vorrichtung, wobei die Matrix ein organisches, metallfreies Molekül auf Basis von Catechol umfasst, das seine Eigenschaften bei Anlegen eines Reizes irreversibel verändert.

2. Verwendung nach Anspruch 1, wobei der Reiz ein elektrisch induzierter chemischer Reiz ist.

3. Verwendung nach Anspruch 1, wobei die irreversibel veränderte Eigenschaft ohne jegliche technische Ausrüstung erkennbar ist.

4. Verwendung nach Anspruch 3, wobei die irreversibel veränderte Eigenschaft eine Änderung der Farbe und/oder der Transparenz ist.

5. Verwendung nach Anspruch 3, wobei die irreversibel veränderte Eigenschaft ohne weiteren elektrischen Eingang für zumindest einen Monat oder sogar länger aufrechterhalten wird.

6. Verwendung nach einem der Ansprüche 1 bis 5, wobei das Molekül auf Basis von Catechol Dopamin oder ein Derivat von Dopamin ist.

7. Verwendung nach Anspruch 6, wobei das organische Molekül auf Basis von Catechol Dopamin ist.

8. Verwendung nach einem der Ansprüche 1 bis 7, wobei die Matrix ferner ein Antioxidans umfasst.

9. Verwendung nach einem der Ansprüche 1 bis 8 in einer elektrochromen Vorrichtung, die einen Behälter, zumindest zwei Elektroden, gegebenenfalls einen Abstandshalter und/oder einen oder mehrere elektrische Kontakte umfasst.

10. Verfahren zur Fertigung einer elektrochromen Vorrichtung, umfassend:
a) Bereitstellen eines Behälters zwischen zwei Elektroden,
b) Beladen des Behälters mit einer elektrochromen Matrix, die ein organisches, metallfreies Molekül auf Basis von Catechol umfasst, das seine Eigenschaften bei Anlegen eines Reizes irreversibel verändert;
c) gegebenenfalls Bereitstellen zumindest eines elektrischen Kontakts; und
d) Versiegeln der Vorrichtung.

11. Verfahren nach Anspruch 10, wobei zumindest eine Komponente eines der Schritte a) bis d) durch 2D-Drucken, 3D-Drucken oder durch additive Fertigungstechnologien, die eine feste oder halbfeste gelartige Matrixformulierung einsetzen, hergestellt wird.

12. Verfahren zur Fertigung einer elektrochromen Vorrichtung nach Anspruch 10 oder 11, wobei das organische Molekül auf Basis von Catechol Dopamin oder ein Derivat von Dopamin ist.

13. Verfahren nach einem der Ansprüche 10 bis 12, ferner umfassend eine Energiespeichervorrichtung und/oder eine interaktive oder Sensorikplattform.

14. Verwendung einer elektrochemischen Vorrichtung, die durch ein Verfahren nach einem der Anspruche 10 bis 13 erhalten werden kann, als Tag oder Etikett.

15. Verwendung nach Anspruch 14, wobei die elektrochrome Vorrichtung als ein "Smart"-Tag oder ein Etikett zur Überwachung der Bedingungen einer Ware während des Transports, der Lagerung und der Manipulation verwendet wird.

## Revendications

1. Utilisation d'une matrice électrochromique dans un dispositif électrochromique, dans laquelle la matrice comprend une molécule organique à base de catéchol exempte de métal qui change ses propriétés de manière irréversible lors de l'application d'un stimulus.

2. Utilisation selon la revendication 1, dans laquelle ledit stimulus est un stimulus chimique induit électriquement.

3. Utilisation selon la revendication 1, dans laquelle la propriété changée irréversible est reconnue visuellement sans un quelconque équipement technique.

4. Utilisation selon la revendication 3, dans laquelle la propriété changée irréversible est un changement de couleur et/ou de transparence.

5. Utilisation selon la revendication 3, dans laquelle la propriété changée irréversible est maintenue sans entrée électrique supplémentaire pendant au moins un mois ou encore plus longtemps.

6. Utilisation selon l'une quelconque des revendications 1 à 5, dans laquelle ladite molécule à base de catéchol est la dopamine ou un dérivé de dopamine.

7. Utilisation selon la revendication 6, dans laquelle la molécule organique à base de catéchol est la dopamine.

8. Utilisation selon l'une quelconque des revendications 1 à 7, dans laquelle ladite matrice comprend en outre un antioxydant.

9. Utilisation selon l'une quelconque des revendications 1 à 8 dans un dispositif électrochromique comprenant un réservoir, au moins deux électrodes, éventuellement un séparateur et/ou un ou plusieurs contacts électriques sont compris.

10. Procédé de fabrication d'un dispositif électrochromique, comprenant :
a) la fourniture d'un réservoir entre deux électrodes,
b) le chargement du réservoir avec une matrice électrochromique comprenant une molécule organique à base de catéchol exempte de métal qui change ses propriétés de manière irréversible lors de l'application d'un stimulus ;
c) la fourniture éventuelle d'au moins un contact électrique ; et
d) le scellement du dispositif.

11. Procédé selon la revendication 10, dans lequel au moins un composant de l'une quelconque des étapes a) à d) est produit par impression 2D, impression 3D ou par des technologies de fabrication additive employant une formulation de matrice de type gel solide ou semi-solide.

12. Procédé de fabrication d'un dispositif électrochromique selon la revendication 10 ou 11, dans lequel la molécule organique à base de catéchol est la dopamine ou un dérivé de dopamine.

13. Procédé selon l'une quelconque des revendications 10 à 12, comprenant en outre un dispositif de stockage d'énergie, et/ou une plateforme interactive ou de détection.

14. Utilisation d'un dispositif électrochromique pouvant être obtenu par un procédé selon l'une quelconque des revendications 10 à 13 comme un marqueur ou une étiquette.

15. Utilisation selon la revendication 14, dans laquelle ledit dispositif électrochromique est utilisé comme un marqueur « intelligent » ou une étiquette permettant de surveiller les états d'une marchandise pendant le transport, le stockage et la manipulation.
